(19) Europäisches Patentamt
European Patent Office
Office européen des brevets

(11) **EP 3 967 948 B1**

(12) **EUROPEAN PATENT SPECIFICATION**

(45) Date of publication and mention of the grant of the patent:
**30.08.2023 Bulletin 2023/35**

(21) Application number: **19928731.9**

(22) Date of filing: **10.05.2019**

(51) International Patent Classification (IPC):
**F24H 4/02** *(2022.01)*      **F24D 19/10** *(2006.01)*
**F24H 4/04** *(2006.01)*      **F24H 9/20** *(2022.01)*

(52) Cooperative Patent Classification (CPC):
**F24H 4/04; F24D 19/1039; F24D 19/1054;**
**F24H 9/2021; F24H 15/269; F24H 15/38;**
F24D 2200/123; F24D 2220/042; F24D 2220/044;
F24D 2220/08; F24D 2240/26

(86) International application number:
**PCT/JP2019/018792**

(87) International publication number:
**WO 2020/230203 (19.11.2020 Gazette 2020/47)**

(54) **THERMAL STORAGE SYSTEM**

WÄRMESPEICHERSYSTEM

SYSTÈME D'ACCUMULATION THERMIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**16.03.2022 Bulletin 2022/11**

(60) Divisional application:
**22216878.3 / 4 202 316**

(73) Proprietor: **MITSUBISHI ELECTRIC**
**CORPORATION**
**Chiyoda-ku**
**Tokyo 100-8310 (JP)**

(72) Inventors:
• **MURATA, Kenta**
**Tokyo 100-8310 (JP)**

• **TAKAYAMA, Keisuke**
**Tokyo 100-8310 (JP)**
• **SATO, Yusuke**
**Tokyo 100-8310 (JP)**
• **HIROSAKI, Hiroki**
**Tokyo 100-8310 (JP)**
• **KOIDE, Toru**
**Tokyo 100-8310 (JP)**

(74) Representative: **Pfenning, Meinig & Partner mbB**
**Patent- und Rechtsanwälte**
**Joachimsthaler Straße 10-12**
**10719 Berlin (DE)**

(56) References cited:
**EP-A1- 2 261 574      EP-A1- 3 333 502**
**WO-A1-2015/177929    JP-A- 2002 228 258**
**JP-A- 2009 150 609    JP-A- 2009 150 609**
**JP-A- 2011 214 736    JP-A- 2011 214 736**

## Description

Field

The present invention relates to a heat storage system.

Background

Patent Literature 1 described below discloses a heat pump water heater including a hot water storage tank. Fig. 10 of Patent Literature 1 discloses that, after activation of the compressor, the operating frequency of the compressor is linearly increased to a target operating frequency. Paten Literature 2 describes a step of acquiring an outlet temperature, which is temperature of a heating medium flowing out from a heating heat exchanger for exchanging heat between a refrigerant compressed by a compressor and a liquid heating medium. A fundamental frequency is calculated in accordance with a temperature difference obtained by subtracting current outlet temperature from a target outlet temperature and in accordance with a current outside air temperature. A positive first correction value is added to a correction frequency when the temperature difference is larger than a positive first reference value and a temporal variation in the outlet temperature is smaller than a reference. An operating frequency of the compressor is controlled in accordance with a sum of the fundamental frequency and the correction frequency. Patent Literature 3 describes a heat pump type water heater that includes an abnormality detecting means for detecting high temperature abnormality on high pressure side or high pressure abnormality of a heat pump cycle, and a control means for controlling so that hot water from a hot water storage tank is boiled to the target boiling temperature and a compressor is once interrupted and then is restarted when the abnormality detecting means detects abnormality.. Patent Literature 4 concerns a heatpump hot water apparatus that corrects an output of a circulation pump such that a circulating water flow rate is controlled to a setting value when a flow rate is different from the setting value. From Patent Literature 5, a storage water heater capable of keeping the temperature of hot water supply stable when there is a fluctuation in the flow rate on the hot water supply side is known. Patent Literature 6 addresses a refrigerant circuit that is controlled, so that starting control is performed to keep a predetermined opening of an electric expansion valve for a prescribed time from start of a heating operation, and to transition to ordinary control to control the opening of the electric expansion valve on the basis of a discharge temperature of the compressor after the lapse of the prescribed time.

Citation List

Patent Literature

    [PTL 1] JP 2005-134070 A
    [PTL 2] EP 3333502 A1
    [PTL 3] JP 2009-150609 A
    [PTL 4] EP 2261574 A1
    [PTL 5] WO 2015/177929 A1
    [PTL 6] JP 2011-214736 ASummary

Technical Problem

If the temperature of the compressor and the temperature of the heat exchanger are still low after activation of the compressor, the temperature of hot water flowing out of the heat pump falls below a target value. As the amount of such low-temperature hot water flowing into the hot water storage tank increases, the energy consumption efficiency of the heat accumulating operation tends to decrease. In the technique of Patent Literature 1, the amount of low-temperature hot water flowing into the hot water storage tank at the start of the heat accumulating operation is likely to increase, which causes a problem in which the energy consumption efficiency is likely to decrease.

The present invention has been made to solve the problem as described above, and an object of the present invention is to provide a heat storage system advantageous for preventing a decrease in energy consumption efficiency of a heat accumulating operation. Solution to Problem

A heat storage system according to the present invention is defined in claim 1 and at least includes: a compressor for compressing refrigerant; a heat storage tank for storing a heating medium; heat exchange means for heating the heating medium using heat of the refrigerant compressed by the compressor, the heat exchange means being provided outside the heat storage tank; a heat accumulating circuit including a feed path for feeding the heating medium flowing out of the heat storage tank to the heat exchange means, a return path for returning the heating medium heated by the heat exchange means into the heat storage tank, and a pump for circulating the heating medium; and control means capable of executing an initial operation configured to control an operating frequency of the compressor at a beginning of a heat accumulating operation in which the heating medium heated by the heat exchange means is accumulated in the heat storage tank. The initial operation includes a first operation configured to maintain the operating frequency at a first frequency and a second operation after the first operation. The second operation is configured to maintain the operating frequency at a second frequency higher than the first frequency. Particular embodiments of the present invention are defined in the independent claims.

Advantageous Effects of Invention

According to the present invention, it is possible to provide the heat storage system advantageous for preventing a decrease in energy consumption efficiency of the heat accumulating operation.

Brief Description of Drawings

Fig. 1 is a view illustrating a heat storage system according to Embodiment 1.
Fig. 2 is a graph illustrating an example of temporal changes in a compressor frequency, an outflow-hot-water temperature, heating power, a water flow rate, and power consumption, at a beginning of a heat accumulating operation.
Fig. 3 is a graph illustrating an example of temporal changes in an inflow water temperature, the outflow-hot-water temperature, the heating power, the water flow rate, the power consumption, and a COP, at an end of the heat accumulating operation.
Fig. 4 is a graph illustrating an example of temporal changes in the compressor frequency, the outflow-hot-water temperature, the heating power, the water flow rate, the power consumption, and an outlet refrigerant temperature, at the beginning of the heat accumulating operation according to Embodiment 1.
Fig. 5 is a graph illustrating an example of temporal changes in the compressor frequency, the outflow-hot-water temperature, the heating power, the water flow rate, the power consumption, and an outlet refrigerant temperature, at a beginning of a heat accumulating operation according to Embodiment 2.
Fig. 6 is a graph illustrating an example of temporal changes in the compressor frequency, the discharged refrigerant temperature, the outflow-hot-water temperature, the heating power, the water flow rate, the power consumption, and the outlet refrigerant temperature, at a beginning of the heat accumulating operation according to a comparative example 4.
Fig. 7 is a flowchart illustrating processing executed by a controller in a comparative example 5.
Fig. 8 is a flowchart illustrating processing executed by the controller in a comparative example 6.

Description of Embodiments

Hereinafter, embodiments will be described with reference to the drawings. Elements common or corresponding to each other in the drawings are denoted by the same reference numerals, and repetitive descriptions thereof are simplified or omitted.

Embodiment 1

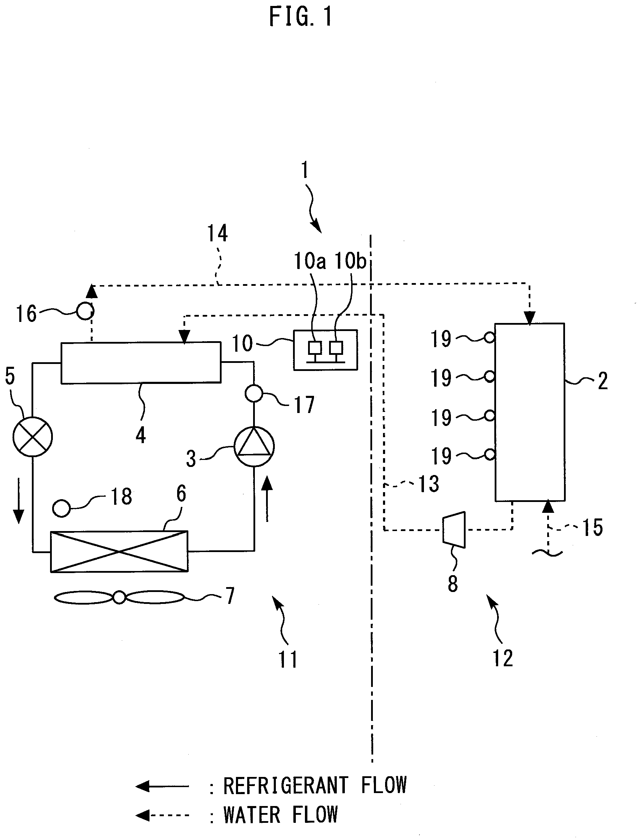

Fig. 1 is a view illustrating a heat storage system according to Embodiment 1.

As illustrated in Fig. 1, a heat storage system 1 according to Embodiment 1 includes a controller 10, a heat pump unit 11, and a tank unit 12 having a hot water storage tank 2. The heat storage system 1 according to Embodiment 1 is suitable for being used as a hot-water-storing hot water supply system. The heat pump unit 11 is provided outdoors. The tank unit 12 may be provided outdoors or may be provided indoors. The heat pump unit 11 and the tank unit 12 are connected via piping and an electric cable (not illustrated).

The controller 10 corresponds to control means that controls operations of the heat storage system 1. Each of actuators and each of sensors included in the heat storage system 1 are electrically connected to the controller 10. The controller 10 may have a timer function for managing time of a day. The controller 10 may also have a calendar function for managing year, month, and day. The controller 10 may be capable of communicating with a user interface device (not illustrated). In the illustrated example, the controller 10 is provided in the heat pump unit 11.

Each of functions of the controller 10 may be implemented by processing circuitry. The processing circuitry of the controller 10 may include at least one processor 10a and at least one memory 10b. The at least one processor 10a may read and execute a program stored in the at least one memory 10b to implement each of the functions of the controller 10. The processing circuitry of the controller 10 may include at least one dedicated hardware. The configuration is not limited to a configuration in which the operations are controlled by the single controller 10 as in the illustrated example. The configuration may be a configuration in which the operations are controlled by a plurality of controllers cooperating with each other. For example, a configuration may be employed in which a first controller installed in the heat pump unit 11 and a second controller installed in the tank unit 12 cooperate with each other to control the operations of the heat storage system 1.

The hot water storage tank 2 stores hot water heated by the heat pump unit 11, i.e., high-temperature water, and low-temperature water before being heated by the heat pump unit 11. Due to the difference in water density caused by the temperature difference, a temperature stratification in which the upper side has a high temperature and the lower side has a low temperature is formed in the hot water storage tank 2. The hot water storage tank 2 corresponds to a heat storage tank that stores a heating medium. In the present embodiment, an example of using liquid water as the heating medium will be described. However, in the present disclosure, the heating medium may be a liquid other than water, for example, a calcium chloride aqueous solution, an ethylene glycol aqueous solution, a propylene glycol aqueous solution, or alcohol. The hot water storage tank 2 is covered with a thermal insulator (not illustrated) for preventing heat dissipation. The shape of the hot water storage tank 2 is not particularly limited and may be, for example, a cylindrical shape whose vertical direction is in the axis direction.

The heat pump unit 11 includes a refrigerant circuit in which a compressor 3, a water heat exchanger 4, a decompressor 5, and an air heat exchanger 6 are annularly connected via refrigerant piping. The heat pump unit 11 further includes a blower 7 that sends outdoor air to the air heat exchanger 6. The heat pump unit 11 performs an operation of a refrigeration cycle, i.e., a heat pump cycle, using the refrigerant circuit. The compressor 3 compresses refrigerant gas. The refrigerant may be, for example, any of carbon dioxide, ammonia, propane, isobutane, fluorocarbons such as HFC, HFO-1123, and HFO-1234yf. Using carbon dioxide as the refrigerant is more advantageous in terms of suppressing the influence on global warming.

The water heat exchanger 4 has a refrigerant flow path through which the refrigerant compressed by the compressor 3 flows, and a water flow path through which the water from the hot water storage tank 2 flows. The water heat exchanger 4 exchanges heat between the refrigerant flowing through the refrigerant flow path and the water flowing through the water flow path to heat the water. The water heat exchanger 4 is provided outside the hot water storage tank 2. The water heat exchanger 4 corresponds to heat exchange means that heats the heating medium using heat of the refrigerant compressed by the compressor 3.

The heat exchange means in the present disclosure is not limited to an example like the water heat exchanger 4 that directly exchanges heat between the refrigerant compressed by the compressor 3 and water. Although not illustrated, the heat exchange means may be, for example, one that heats water via a relay heating medium from refrigerant. In this case, the heat exchange means may include a first heat exchanger (not illustrated) that exchanges heat between the relay heating medium and the refrigerant compressed by the compressor 3, a second heat exchanger (not illustrated) that exchanges heat between the relay heating medium heated by the first heat exchanger and water, and a pump (not illustrated) that circulates the relay heating medium between the first heat exchanger and the second heat exchanger.

The decompressor 5 expands and decompresses high-pressure refrigerant that has passed through the water heat exchanger 4. The decompressor 5 may be an expansion valve whose opening degree is adjustable. The air heat exchanger 6 exchanges heat between outdoor air and low-pressure refrigerant that has passed through the decompressor 5 to evaporate the low-pressure refrigerant. Low-pressure refrigerant gas that has passed through the air heat exchanger 6 flows into the compressor 3.

A lower part of the hot water storage tank 2 and an inlet of the water flow path of the water heat exchanger 4 are connected via a feed path 13. A water pump 8 is connected to an intermediate portion of the feed path 13. An outlet of the water flow path of the water heat exchanger 4 and an upper part of the hot water storage tank 2 are connected via a return path 14. In the illustrated example, the water pump 8 is provided in the tank unit 12. Instead of the illustrated example, the water pump 8 may be provided in the heat pump unit 11.

A water supply pipe 15 is connected to the lower part of the hot water storage tank 2. A hot water supply pipe (not illustrated) for supplying hot water from the hot water storage tank 2 is connected to the upper part of the hot water storage tank 2. When the heat storage system 1 is used, low-temperature water supplied from a water source such as a waterworks passes through the water supply pipe 15 and flows into the lower part of the hot water storage tank 2, so that the hot water storage tank 2 is always filled with water. At the time of hot water supply, pressure from the water supply pipe 15 causes hot water in the hot water storage tank 2 to flow out to the hot water supply pipe. Accordingly, the same amount of the low-temperature water flows from the water supply pipe 15 into the lower part of the hot water storage tank 2.

The water pump 8, the feed path 13, and the return path 14 form a heat accumulating circuit. When the water pump 8 is operated, water circulates in the heat accumulating circuit. The heat storage system 1 is capable of executing a heat accumulating operation. The heat accumulating operation is an operation in which water is circulated in the heat accumulating circuit and high-temperature water heated by the water heat exchanger 4 is accumulated in the hot water storage tank 2. The heat accumulating operation is performed as follows. The water pump 8 and the heat pump unit 11 are operated. Water that has flowed out of the lower part of the hot water storage tank 2 is sent to the water heat exchanger 4 through the feed path 13. The high-temperature water heated by the water heat exchanger 4 returns to the tank unit 12 through the return path 14 and flows into the upper part in the hot water storage tank 2. By performing the heat accumulating operation as described above, the high-temperature water is gradually stored in the hot water storage tank 2 from the upper part to the lower part, and a temperature boundary layer between the high-temperature water and the low-temperature water gradually moves downward.

In the following description, the temperature of the water flowing out of the water heat exchanger 4 is referred to as an "outflow-hot-water temperature." The outflow-hot-water temperature corresponds to an outlet temperature which is a temperature of the heating medium flowing out of the water heat exchanger 4. An outflow-hot-water temperature sensor 16 provided in the return path 14 detects the outflow-hot-water temperature. The outflow-hot-water temperature sensor 16 corresponds to outlet temperature detection means.

In the following description, the temperature of the refrigerant discharged from the compressor 3 is referred to as a "discharged refrigerant temperature." A discharge temperature sensor 17 provided in a refrigerant path between an outlet of the compressor 3 and the water heat exchanger 4 detects the discharged refrigerant temperature. The discharge temperature sensor 17 corresponds to refrigerant temperature detection means. An outdoor air temperature sensor 18 detects a temperature of the outdoor air flowing into the air heat exchanger 6.

A plurality of stored hot water temperature sensors 19 is attached to the hot water storage tank 2. These stored hot water temperature sensors 19 are positioned at different heights. A temperature distribution of the hot water in the hot water storage tank 2 in the vertical direction can be detected by the stored hot water temperature sensors 19. The controller 10 can calculate a hot water remaining amount and a heat storage amount in the hot water storage tank 2 using the temperature distribution. The stored hot water temperature sensors 19 correspond to temperature distribution detection means that detects a temperature distribution of the heating medium stored in the hot water storage tank 2.

In the following description, a target value of the outflow-hot-water temperature is referred to as a "target outflow-hot-water temperature," and an outflow-hot-water temperature detected by the outflow-hot-water temperature sensor 16 is referred to as an "actual outflow-hot-water temperature." The target outflow-hot-water temperature may be, for example, a value within a range of 65°C to 90°C.

In the heat accumulating operation, the controller 10 uses the water pump 8 to control the flow rate of the water flowing through the heat accumulating circuit so that the actual outflow-hot-water temperature becomes equal to the target outflow-hot-water temperature. This control is hereinafter referred to as "water flow rate feedback control." The operating speed of the water pump 8 is hereinafter referred to as a "pump speed." The pump speed may be, for example, the rotation speed of the water pump 8. In the following description, the flow rate of the water flowing through the heat accumulating circuit is simply referred to as a "water flow rate."

The water flow rate feedback control is performed as follows, for example. When the actual outflow-hot-water temperature is lower than the target outflow-hot-water temperature, the controller 10 reduces the pump speed to thereby reduce the water flow rate. When the actual outflow-hot-water temperature is higher than the target outflow-hot-water temperature, the controller 10 increases the pump speed to thereby increase the water flow rate. The water flow rate feedback control can cause the actual outflow-hot-water temperature to approach the target outflow-hot-water temperature.

In the following description, the amount of heat given by the refrigerant to the water in the water heat exchanger 4 per time is referred to as a "heating power." The unit of the heating power is, for example, watt.

The controller 10 controls an operation of the compressor 3. The operating speed of the compressor 3 is variable. The controller 10 can vary the operating speed of the compressor 3 by varying the operating frequency of an electric motor included in the compressor 3 by inverter control. As the operating frequency of the compressor 3 is higher, the operating speed of the compressor 3 is higher. As the operating speed of the compressor 3 is higher, the refrigerant circulation amount is higher, and the heating power is higher. The operating frequency of the compressor 3 is hereinafter referred to as a "compressor frequency."

As the outdoor air temperature is higher, the amount of heat absorbed by the refrigerant from the outdoor air in the air heat exchanger 6 is higher. If the compressor frequency is made constant, as the outdoor air temperature is higher, the heating power is higher.

The controller 10 may determine a target value of the operating speed or operating frequency of the compressor 3 in the heat accumulating operation according to a target value of the heating power and the outdoor air temperature detected by the outdoor air temperature sensor 18.

The opening degree of the decompressor 5 is hereinafter referred to as a "decompressor opening degree." Furthermore, a difference between a target value of the discharged refrigerant temperature and the discharged refrigerant temperature detected by the discharge temperature sensor 17 is referred to as a "refrigerant temperature deviation." The controller 10 corrects the decompressor opening degree in response to the refrigerant temperature deviation. For example, the controller 10 corrects the decompressor opening degree so that the discharged refrigerant temperature detected by the discharge temperature sensor 17 becomes equal to the target value.

Energy consumption efficiency of the heat pump unit 11 is represented as a ratio of the heating power to the power consumption of the heat pump unit 11. In the present embodiment, a coefficient of performance (COP) is used as the energy consumption efficiency. In the following description, the power consumption of the heat pump unit 11 is simply referred to as "power consumption."

The temperature of the water flowing from the feed path 13 into the water heat exchanger 4 is hereinafter referred to as an "inflow water temperature." As the inflow water temperature is higher, the heating power decreases, so that the COP of the heat pump unit 11 decreases.

As described above, unheated low-temperature water flows into the lower part of the hot water storage tank 2 from the water supply pipe 15, and high-temperature water heated by the heat pump unit 11 flows into the upper part of the hot water storage tank 2. A medium-temperature water layer having a temperature of, for example, about 30°C to 50°C may be generated between the high-temperature water layer and the low-temperature water layer in the hot water storage tank 2. This medium-temperature water layer gradually moves downward in the hot water storage tank 2 during execution of the heat accumulating operation. At the end of the heat accumulating operation, once the medium-temperature water layer reaches a lowermost part in the hot water storage tank 2, the medium-temperature water flows into the water heat exchanger 4 through the feed path 13. As a result, the inflow water temperature increases, so that the COP decreases. As the medium-temperature water in the hot water storage tank 2 increases, the inflow water temperature easily increases at the end of the heat accumulating operation, so that the COP easily decreases at the end of the heat accumulating operation. Thus, the increase in the medium-temperature water in the hot water storage tank 2 is not preferable.

The beginning of the heat accumulating operation is right after activation of the compressor 3, and thus the temperature of the compressor 3 and the temperature of the water heat exchanger 4 are low. Thus, at the beginning of the heat accumulating operation, hot water at a temperature lower than the target outflow-hot-water temperature flows out of the water heat exchanger 4. This state is hereinafter referred to as a "low-temperature outflow." As the water flow rate in the low-temperature outflow is higher, the medium-temperature water in the hot water storage tank 2 easily increases, so that the COP easily decreases at the end of the heat accumulating operation.

In the present embodiment, the controller 10 is capable of executing an initial operation that controls the compressor frequency at the beginning of the heat accumulating operation. The initial operation includes a first operation that maintains the compressor frequency at a first frequency and, after the first operation, a second operation that maintains the compressor frequency at a second frequency higher than the first frequency. According to the present embodiment, executing the initial operation can reduce the water flow rate in the low-temperature outflow. As a result, the amount of the medium-temperature water in the hot water storage tank 2 can be reduced, so that the decrease in the COP at the end of the heat accumulating operation can be reduced. The reason for this will be described below.

A water-side heating power Qw is the amount of heat received by the water in the water heat exchanger 4 per time. The water-side heating power Qw can be calculated by the following formula, where the outflow-hot-water temperature is Two, the inflow water temperature is Twi, the water flow rate is Vw, and the specific heat of the water is Cpw.

$$Qw = (Two - Twi) \times Vw \times Cpw \ ... \ (1)$$

A refrigerant-side heating power Qr is the amount of heat lost by the refrigerant in the water heat exchanger 4 per time. The refrigerant-side heating power Qr can be calculated by the following formula, where the enthalpy of the refrigerant flowing into the water heat exchanger 4 is Ein, the enthalpy of the refrigerant flowing out of the water heat exchanger 4 is Eout, and the refrigerant circulation amount is Rc.

$$Qr = (Ein - Eout) \times Rc \ ... \ (2)$$

Here, when the amount of heat dissipated from the water heat exchanger 4 to ambient air and the like is ignored, the water-side heating power Qw is equal to the refrigerant-side heating power Qr. Reducing the compressor frequency reduces the refrigerant circulation amount Rc, so that the refrigerant-side heating power Qr decreases based on the above formula (2). The water-side heating power Qw also decreases accordingly. Here, the inflow water temperature Twi is determined according to the environmental condition and thus can be considered constant. The outflow-hot-water temperature Two is controlled by the pump speed as described above. Accordingly, when the water-side heating power Qw decreases, the water flow rate Vw decreases based on the above formula (1).

When the compressor 3 is activated, the controller 10 executes the first operation of the initial operation. In the first operation of the initial operation, the controller 10 keeps the compressor frequency at the first frequency lower than the second frequency. Thus, in the first operation of the initial operation, the refrigerant-side heating power Qr is lower, and accordingly the water-side heating power Qw is lower and the water flow rate Vw is lower. In this way, the water flow rate Vw in the low-temperature outflow can be reduced. As a result, the amount of the medium-temperature water in the hot water storage tank 2 can be reduced, so that the decrease in the COP at the end of the heat accumulating operation can be reduced.

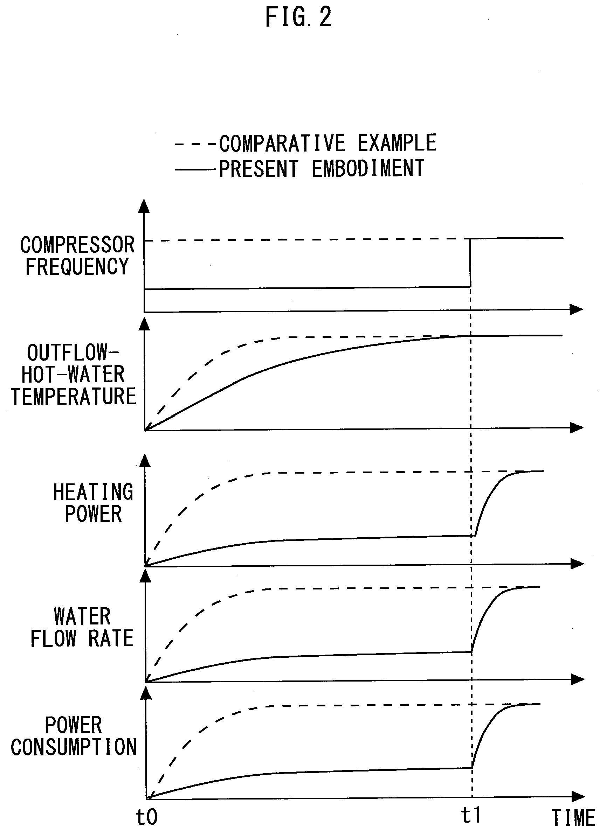

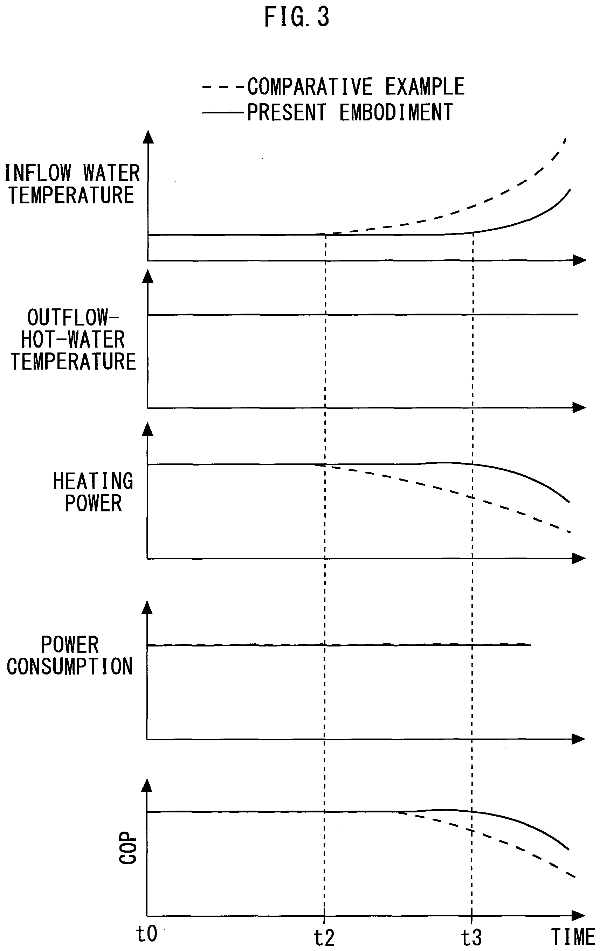

Fig. 2 is a graph illustrating an example of temporal changes in the compressor frequency, the outflow-hot-water temperature, the heating power, the water flow rate, and the power consumption, at the beginning of the heat accumulating operation. Fig. 3 is a graph illustrating an example of temporal changes in the inflow water temperature, the outflow-hot-water temperature, the heating power, the water flow rate, the power consumption, and the COP, at the end of the heat accumulating operation. In these graphs, the solid lines correspond to an example according to the present embodiment, and the broken lines correspond to a comparative example.

As illustrated in Fig. 2, the controller 10 in the present embodiment executes the first operation of the initial operation between a time t0 to a time t1 and executes the second operation of the initial operation after the time t1. The controller 10 switches the compressor frequency from the first frequency to the second frequency at the time t1.

The comparative example is an operation that maintains the compressor frequency at the second frequency from the start without execution of the initial operation. As illustrated in Fig. 2, according to the present embodiment, the heating power, the water flow rate and the power consumption, at the beginning of the heat accumulating operation, are lower than those of the comparative example. According to the present embodiment, the water flow rate at the beginning of the heat accumulating operation is lower than that of the comparative example, so that the amount of the medium-temperature water accumulated in the hot water storage tank 2 is smaller than that of the comparative example.

As illustrated in Fig. 3, in the comparative example, at the end of the heat accumulating operation, the inflow water temperature starts to increase from a time t2. In association with the increase in the inflow water temperature, the heating power and the COP decrease. In contrast, according to the present embodiment, the inflow water temperature starts to increase from a time t3 later than the time t2. Thus, according to the present embodiment, the timing at which the inflow water temperature starts to increase at the end of the heat accumulating operation can be more delayed than that of the comparative example. This is because the amount of the medium-temperature water in the hot water storage tank 2 is smaller than that of the comparative example. According to the present embodiment, the decrease in the COP at the end of the heat accumulating operation can be more reduced than that of the comparative example.

The value of the second frequency corresponds to a value that makes it possible to obtain a target heating power when the heat accumulating operation reaches a stable state. According to the present embodiment, the second operation that maintains the compressor frequency at the second frequency is executed in the initial operation, so that when the heat accumulating operation reaches a stable state, the target heating power can be obtained.

The controller 10 may determine the value of the second frequency in response to the outdoor air temperature detected by the outdoor air temperature sensor 18. For example, the controller 10 may determine the second frequency such that as the outdoor air temperature is lower, the value of the second frequency is higher.

The controller 10 may complete the first operation on the condition that the actual outflow-hot-water temperature has reached a target temperature. In this case, in response to the resolution or the like of the outflow-hot-water temperature sensor 16, when the actual outflow-hot-water temperature enters an allowable range of, for example, about ±2°C with respect to the target outflow-hot-water temperature, the controller 10 may determine that the actual outflow-hot-water temperature has reached the target temperature and complete the first operation. This allows to complete the first operation at a more appropriate timing.

Embodiment 2

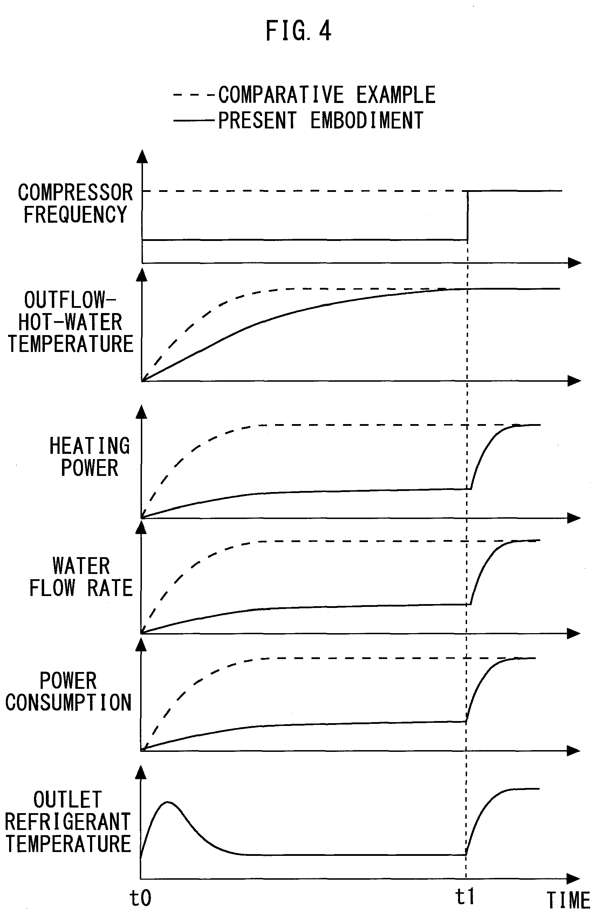

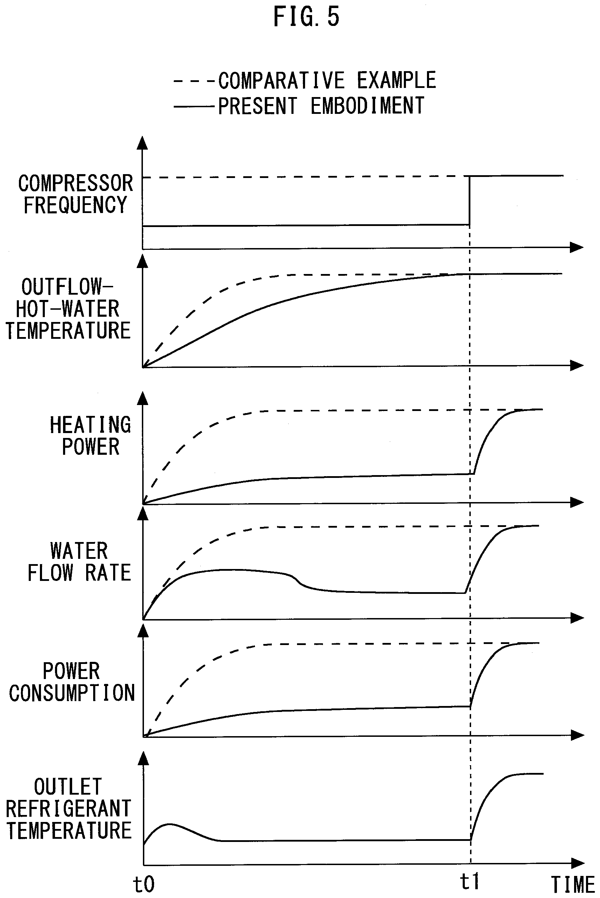

Next, with reference to Figs. 4 and 5, Embodiment 2 will be described focusing on differences from Embodiment 1 described above. Elements common or corresponding to the elements described above are denoted by the same reference numerals, and repetitive descriptions thereof are simplified or omitted.

In the following description, the temperature of the refrigerant flowing out of the water heat exchanger 4 is referred to as an "outlet refrigerant temperature." Fig. 4 is a graph illustrating an example of temporal changes in the compressor frequency, the outflow-hot-water temperature, the heating power, the water flow rate, the power consumption, and the outlet refrigerant temperature, at the beginning of the heat accumulating operation according to Embodiment 1. Fig. 4 corresponds to Fig. 2 with the graph of the outlet refrigerant temperature added thereto.

As illustrated in Fig. 4, in Embodiment 1, the outlet refrigerant temperature may greatly increase right after the start of the first operation of the initial operation. This cause is as follows. Right after the start of the first operation, the actual outflow-hot-water temperature is lower than the target outflow-hot-water temperature, so that the water flow rate is suppressed at an extremely low value by the water flow rate feedback control. As the water flow rate is lower, the outlet refrigerant temperature is higher. As the outlet refrigerant temperature is higher, the difference between the enthalpy of the refrigerant flowing into the water heat exchanger 4 and the enthalpy of the refrigerant flowing out of the water heat exchanger 4 is smaller, so that the heating power is lower. As a result, the COP decreases. In this way, in Embodiment 1, the great increase in the outlet refrigerant temperature right after the start of the first operation may result in the decrease in the COP.

In Embodiment 2, to reduce the decrease in the COP right after the start of the first operation, the water flow rate right after the start of the first operation is made higher than that of Embodiment 1. Fig. 5 is a graph illustrating an example of temporal changes in the compressor frequency, the outflow-hot-water temperature, the heating power, the water flow rate, the power consumption, and the outlet refrigerant temperature, at the beginning of the heat accumulating operation according to Embodiment 2.

As illustrated in Fig. 5, the water flow rate right after the start of the first operation in the present embodiment is higher than that of Embodiment 1 but lower than that of the comparative example. Thereafter, the water flow rate of the first operation in the present embodiment decreases at the same level as in Embodiment 1. According to the present embodiment as described above, right after the start of the first operation, the increase in the outlet refrigerant temperature is smaller than that of Embodiment 1, so that the decrease in the COP can be more reduced than that of Embodiment 1.

In the following description, the difference between the target outflow-hot-water temperature and the actual outflow-hot-water temperature is referred to as an "outlet temperature deviation." In the water flow rate feedback control, the controller 10 corrects the pump speed in response to the outlet temperature deviation.

As a method of making the water flow rate right after the start of the first operation higher than that of Embodiment 1, at least one of the following examples 1 to 3 may be employed.

(Example 1) The controller 10 sets the target outflow-hot-water temperature such that the target outflow-hot-water temperature increases over time during execution of the first operation. For example, the controller 10 may set the target outflow-hot-water temperature to a low value right after the start of the first operation and, thereafter over time, increase the target outflow-hot-water temperature stepwise. Thus, the outlet temperature deviation right after the start of the first operation is smaller than that of Embodiment 1, so that the action of correcting the water flow rate in the decrease direction by the water flow rate feedback control is weaker than that of Embodiment 1. As a result, the water flow rate right after the start of the first operation is higher than that of Embodiment 1.

(Example 2) In the following description, in the water flow rate feedback control, the sensitivity at which the outlet temperature deviation is reflected in the decrease in the pump speed is referred to as a "first sensitivity," and the sensitivity at which the outlet temperature deviation is reflected in the increase in the pump speed is referred to as a "second sensitivity." For example, the first sensitivity corresponds to the gain of the water flow rate feedback control when the actual outflow-hot-water temperature is lower than the target outflow-hot-water temperature. Furthermore, the second sensitivity corresponds to the gain of the water flow rate feedback control when the actual outflow-hot-water temperature is higher than the target outflow-hot-water temperature. The controller 10 causes the first sensitivity to be lower than the second sensitivity in the first operation. Thus, right after the start of the first operation, the action of correcting the water flow rate in the decrease direction by the water flow rate feedback control is weaker than that of Embodiment 1. As a result, the water flow rate right after the start of the first operation is higher than that of Embodiment 1.

(Example 3) The controller 10 causes the sensitivity at which the outlet temperature deviation is reflected in the change in the pump speed in the first operation to be lower than the sensitivity at which the outlet temperature deviation is reflected in the change in the pump speed in the second operation. For example, the controller 10 causes the gain of the water flow rate feedback control in the first operation to be lower than the gain of the water flow rate feedback control in the second operation. Thus, right after the start of the first operation, the action of correcting the water flow rate in the decrease direction by the water flow rate feedback control is weaker than that of Embodiment 1. As a result, the water flow rate right after the start of the first operation is higher than that of Embodiment 1.

Embodiment 3

Next, Embodiment 3 will be described focusing on differences from the embodiments described above. Elements common or corresponding to the elements described above are denoted by the same reference numerals, and repetitive descriptions thereof are simplified or omitted.

The pressure of the refrigerant discharged from the compressor 3 is hereinafter referred to as a "refrigerant high pressure." Furthermore, the difference between the enthalpy of the refrigerant flowing into the water heat exchanger 4 and the enthalpy of the refrigerant flowing out of the water heat exchanger 4 is hereinafter referred to as a "refrigerant enthalpy difference."

The refrigerant circulation amount in the first operation in which the compressor 3 is operated at the first frequency, which is relatively low, is smaller than that in the second operation in which the compressor 3 is operated at the second frequency, which is relatively high. Thus, when it is assumed that the sensitivity of the throttle of the decompressor 5 is the same, the refrigerant high pressure hardly increases in the first operation. As a result, the refrigerant enthalpy difference is smaller, so that the heating power is lower.

In the present embodiment, the controller 10 causes the sensitivity at which the refrigerant temperature deviation is reflected in the change in the decompressor opening degree in the first operation to be higher than the sensitivity at which the refrigerant temperature deviation is reflected in the change in the decompressor opening degree in the second operation. This provides the following effects. In the first operation, the refrigerant high pressure easily increases even when the refrigerant circulation amount is small, so that the refrigerant enthalpy difference is larger than that of Embodiment 1, and the heating power is larger than that of Embodiment 1. Furthermore, the discharged refrigerant temperature increases more easily than that of Embodiment 1. From these, the outflow-hot-water temperature can be increased earlier than that of Embodiment 1.

Typically, when the sensitivity of the throttle of the decompressor 5 is increased, the refrigerant high pressure tends to increase excessively. In contrast, according to the present embodiment, the sensitivity of the throttle of the decompressor 5 is increased in the first operation in which the refrigerant circulation amount is small, so that there is no possibility that the refrigerant high pressure increases excessively.

Comparative example 4

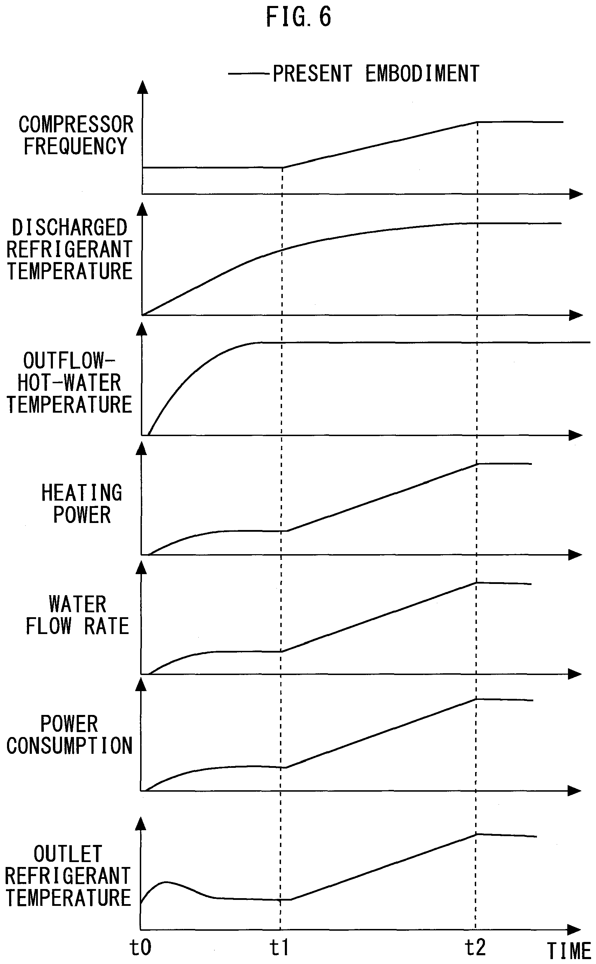

Next, with reference to Fig. 6, a comparative example 4 will be described focusing on differences from the embodiments described above. Elements common or corresponding to the elements described above are denoted by the same reference numerals, and repetitive descriptions thereof are simplified or omitted. Fig. 6 is a graph illustrating an example of temporal changes in the compressor frequency, the discharged refrigerant temperature, the outflow-hot-water temperature, the heating power, the water flow rate, the power consumption, and the outlet refrigerant temperature, at the beginning of the heat accumulating operation according to comparative example 4.

The controller 10 in the present embodiment executes a shifting operation between the first operation and the second operation in the initial operation. In the shifting operation of the initial operation, the controller 10 controls the compressor frequency so that the compressor frequency gradually increases from the first frequency to the second frequency.

In the example illustrated in Fig. 6, the controller 10 executes the first operation between the time t0 to the time 11, executes the shifting operation between the time t1 to the time t2, and executes the second operation after the time t2. In this example, the heating power, the water flow rate, the power consumption, and the outlet refrigerant temperature, in the shifting operation gradually increase in association with the increase in the compressor frequency. Although in the example of Fig. 6, the compressor frequency in the shifting operation increases continuously, the compressor frequency in the shifting operation may increase stepwise in multiple stages.

The present embodiment provides the following effects. Executing the shifting operation between the first operation and the second operation can more reliably prevent the state of the refrigeration cycle from changing rapidly. As a result, the decrease in the COP can be reduced more reliably, and the excessive increase in the refrigerant high pressure can be prevented more reliably. In addition, the refrigerant enthalpy difference can be secured more stably, and the decrease in the heating power can be prevented more reliably.

Comparative example 5

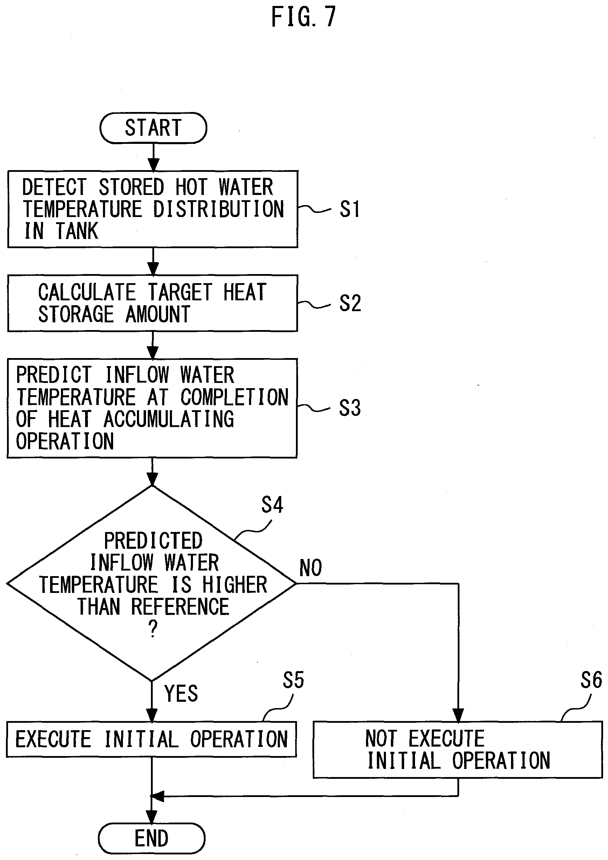

Next, with reference to Fig. 7, a comparative example 5 will be described focusing on differences from the embodiments described above. Elements common or corresponding to the elements described above are denoted by the same reference numerals, and repetitive descriptions thereof are simplified or omitted. Fig. 7 is a flowchart illustrating processing executed by the controller 10 in comparative example 5.

In the following description, a target heat storage amount accumulated in the hot water storage tank 2 by the heat accumulating operation is simply referred to as a "target heat storage amount," and the temperature distribution in the hot water storage tank 2 in the vertical direction which is detected by the stored hot water temperature sensors 19 is referred to as a "stored hot water temperature distribution." In the present embodiment, at the time of starting the heat accumulating operation, the controller 10 determines whether to execute the initial operation, in response to the target heat storage amount and the stored hot water temperature distribution. When it is determined that the initial operation is not executed, the controller 10 performs control right after the start of the heat accumulating operation so that the compressor frequency is maintained at the second frequency.

When the target heat storage amount is small, the heat accumulating operation is completed before the medium-temperature water in the hot water storage tank 2 reaches the lowermost part in the hot water storage tank 2, so that the increase in the inflow water temperature at the end of the heat accumulating operation does not occur. In such a case, it can be said that the advantage of executing the initial operation is relatively small. Thus, in the present embodiment, at the time of starting the heat accumulating operation, the controller 10 predicts whether the increase in the inflow water temperature at the end of the heat accumulating operation occurs, based on the target heat storage amount and the stored hot water temperature distribution. When it is predicted that the increase in the inflow water temperature at the end of the heat accumulating operation does not occur, the controller 10 does not execute the initial operation. This allows omission of the initial operation when the advantage of executing the initial operation is relatively small.

The controller 10 executes the processing of the flowchart of Fig. 7 at the time of starting the heat accumulating operation. In step S1 of Fig. 7, the controller 10 detects the stored hot water temperature distribution using the stored hot water temperature sensors 19. From the stored hot water temperature distribution, the controller 10 can acquire information such as the current hot water remaining amount and the current heat storage amount in the hot water storage tank 2 and the position of the medium-temperature water in the hot water storage tank 2.

Next, in step S2, the controller 10 calculates the target heat storage amount. Although not illustrated, the heat storage system 1 may include a supplied hot water temperature sensor and a supplied hot water flow rate sensor, for detecting a hot water supply load. The controller 10 may calculate the target heat storage amount using information obtained by learning the past hot water supply load. For example, the controller 10 may store the hot water supply load for the past two weeks in the memory and calculate the target heat storage amount based on data obtained by statistically processing the hot water supply load for the past two weeks.

Subsequently, in step S3, the controller 10 predicts the inflow water temperature at the completion of the heat accumulating operation. For example, the controller 10 predicts the inflow water temperature at the completion of the heat accumulating operation by calculating, based on the target heat storage amount, the target outflow-hot-water temperature, and the target heating power, how far the medium-temperature water in the hot water storage tank 2 will move downward by the end of the heat accumulating operation.

Next, in step S4, the controller 10 compares the inflow water temperature at the completion of the heat accumulating operation which has been predicted in step S3 with a reference. When the predicted inflow water temperature at the completion of the heat accumulating operation is higher than the reference, in step S5, the controller 10 starts the heat accumulating operation in association with execution of the initial operation. In contrast, when the predicted inflow water temperature at the completion of the heat accumulating operation is equal to or less than the reference, in step S6, the controller 10 starts the heat accumulating operation without execution of the initial operation.

The heating power is lower during operation of the compressor 3 at the first frequency than during operation of the compressor 3 at the second frequency. Thus, when a large hot water supply load occurs while the hot water remaining amount in the hot water storage tank 2 is small and the compressor 3 is operated at the first frequency, the hot water in the hot water storage tank 2 may be depleted. According to the present embodiment, when the advantage of executing the initial operation is relatively small, the initial operation is omitted, and the compressor 3 is operated at the second frequency right after the start of the heat accumulating operation. Thus, even when a large hot water supply load occurs right after the start of the heat accumulating operation, depletion of the hot water in the hot water storage tank 2 can be prevented more reliably.

Comparative example 6

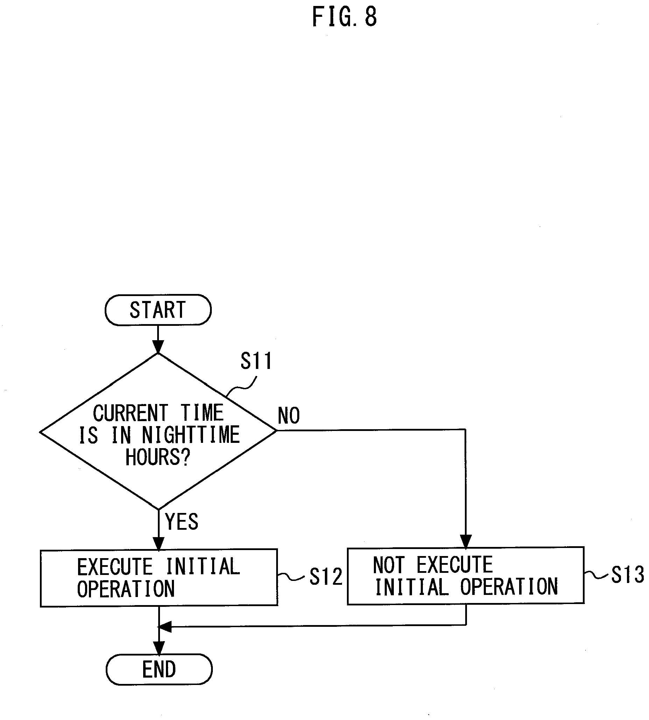

Next, with reference to Fig. 8, a comparative example 6 will be described focusing on differences from the embodiments described above. Elements common or corresponding to the elements described above are denoted by the same reference numerals, and repetitive descriptions thereof are simplified or omitted. Fig. 8 is a flowchart illustrating processing executed by the controller 10 in comparative example 6.

The controller 10 stores a start time and a completion time during nighttime hours. The nighttime hours may be, for example, hours from 23:00 to 7:00 next morning or hours from 22:00 to 6:00 next morning. The nighttime hours may be hours in which the unit price of the electric power charge is cheaper. Furthermore, the start time and the completion time during the nighttime hours may be set by a user. The nighttime hours can be considered hours having a high possibility that the user is asleep. Accordingly, it can be considered that the possibility that the user uses hot water supply is relatively low during the nighttime hours.

The hours other than the nighttime hours during a day is hereinafter referred to as "activity hours." The activity hours can be considered hours having a high possibility that the user is not asleep. Accordingly, it can be considered that the possibility that the user uses hot water supply is relatively high during the activity hours.

In the present embodiment, the controller 10 executes the initial operation when the heat accumulating operation is performed during the nighttime hours and does not execute the initial operation when the heat accumulating operation is performed during the activity hours. When the initial operation is not executed, the controller 10 performs control right after the start of the heat accumulating operation so that the compressor frequency is maintained at the second frequency.

The controller 10 executes the processing of the flowchart of Fig. 8 at the time of starting the heat accumulating operation. In step S11 of Fig. 8, the controller 10 determines whether the current time is in the nighttime hours. When the current time is in the nighttime hours, in step S12, the controller 10 starts the heat accumulating operation in association with execution of the initial operation. In contrast, when the current time is in the activity hours, in step S13, the controller 10 starts the heat accumulating operation without execution of the initial operation.

A large hot water supply load may occur in the activity hours. When a large hot water supply load occurs while the hot water remaining amount in the hot water storage tank 2 is small and the compressor 3 is operated at the first frequency, the hot water in the hot water storage tank 2 may be depleted. According to the present embodiment, in the activity hours, the initial operation is omitted, and the compressor 3 is operated at the second frequency right after the start of the heat accumulating operation. Thus, even when a large hot water supply load occurs right after the start of the heat accumulating operation, depletion of the hot water in the hot water storage tank 2 can be prevented more reliably.

In contrast, in the nighttime hours, the possibility that a large hot water supply load occurs is low. Thus, when the heat accumulating operation is performed during the nighttime hours, the possibility that a large hot water supply load occurs while the compressor 3 is operated at the first frequency is low, so that depletion of the hot water in the hot water storage tank 2 can be prevented reliably.

It should be noted that, of the plurality of embodiments described above, two or more combinable ones may be combined and implemented.

Reference Signs List

| | |
|---|---|
| 1 | heat storage system |
| 2 | hot water storage tank |
| 3 | compressor |
| 4 | water heat exchanger |
| 5 | decompressor |

| | |
|---|---|
| 6 | air heat exchanger |
| 7 | blower |
| 8 | water pump |
| 10 | controller |
| 10a | processor |
| 10b | memory |
| 11 | heat pump unit |
| 12 | tank unit |
| 13 | feed path |
| 14 | return path |
| 15 | water supply pipe |
| 16 | outflow-hot-water temperature sensor |
| 17 | discharge temperature sensor |
| 18 | outdoor air temperature sensor |
| 19 | hot water temperature sensor |
| 5 | decompressor |
| 6 | air heat exchanger |
| 7 | blower |
| 8 | water pump |
| 10 | controller |
| 10a | processor |
| 10b | memory |
| 11 | heat pump unit |
| 12 | tank unit |
| 13 | feed path |
| 14 | return path |
| 15 | water supply pipe |
| 16 | outflow-hot-water temperature sensor |
| 17 | discharge temperature sensor |
| 18 | outdoor air temperature sensor |
| 19 | hot water temperature sensor |

**Claims**

1. A heat storage system (1) comprising:

    a compressor (3) for compressing refrigerant;
    a heat storage tank (2) for storing a heating medium;
    heat exchange means (4) for heating the heating medium using heat of the refrigerant compressed by the compressor (3), the heat exchange means (4) being provided outside the heat storage tank (2);
    a heat accumulating circuit including a feed path (13) for feeding the heating medium flowing out of the heat storage tank (2) to the heat exchange means (4), a return path (14) for returning the heating medium heated by the heat exchange means (4) into the heat storage tank (2), and a pump (8) for circulating the heating medium;
    control means (10) capable of executing an initial operation configured to control an operating frequency of the compressor (3) at a beginning of a heat accumulating operation in which the heating medium heated by the heat exchange means (4) is accumulated in the heat storage tank (2); and
outlet temperature detection means (16) for detecting an outlet temperature, the outlet temperature being a temperature of the heating medium flowing out of the heat exchange means (4),
**characterized in that**
the initial operation includes a first operation configured to maintain the operating frequency at a first frequency and a second operation after the first operation, the second operation being configured to maintain the operating frequency at a second frequency higher than the first frequency,
wherein the control means (10) is configured to complete the first operation when the outlet temperature reaches a target temperature.

2. The heat storage system (1) according to claim 1, wherein the control means (10) is configured to control a flow rate of the heating medium using the pump (8) so that the outlet temperature becomes equal to a target temperature.

3. The heat storage system (1) according to claim 1 or 2,

    wherein the control means (10) is configured to correct a speed of the pump (8) in response to an outlet temperature deviation, the outlet temperature deviation being a difference between the target temperature and the outlet temperature,
    a first sensitivity is a sensitivity at which the outlet temperature deviation is reflected in a decrease in the speed of the pump (8),
    a second sensitivity is a sensitivity at which the outlet temperature deviation is reflected in an increase in the speed of the pump (8), and
    the first sensitivity is lower than the second sensitivity in the first operation.

4. The heat storage system (1) according to any one of claims 1 to 3,

    wherein the control means (10) is configured to correct a speed of the pump (8) in response to an outlet temperature deviation, the outlet temperature deviation being a difference between the target temperature and the outlet temperature, and
    a sensitivity at which the outlet temperature deviation is reflected in a change in the speed of the pump (8) in the first operation is lower than a sensitivity at which the outlet temperature deviation is reflected in a change in the speed of the pump (8) in the second operation.

5. The heat storage system (1) according to any one of claims 1 to 4, wherein the initial operation includes a shifting operation configured to gradually increase the operating frequency from the first frequency to the second frequency between the first operation and the second operation.

6. The heat storage system (1) according to any one of claims 1 to 5, wherein carbon dioxide is used as the refrigerant.

**Patentansprüche**

1. Wärmespeichersystem (1), umfassend:

einen Verdichter (3) zum Verdichten von Kältemittel;
einen Wärmespeicherbehälter (2) zum Speichern eines Heizmediums;
Wärmetauschmittel (4) zum Erwärmen des Heizmediums unter Verwendung der Wärme des durch den Verdichter (3) komprimierten Kältemittels, wobei das Wärmetauschmittel (4) außerhalb des Wärmespeicherbehälters (2) vorgesehen ist;
einen Wärmespeicherkreislauf, der einen Zuführungsweg (13) zum Zuführen des aus dem Wärmespeicherbehälter (2) strömenden Heizmediums zu dem Wärmetauschmittel (4), einen Rückführungsweg (14) zum Zurückführen des von dem Wärmetauschmittel (4) erwärmten Heizmediums in den Wärmespeicherbehälter (2) und eine Pumpe (8) zum Zirkulieren des Heizmediums aufweist;
eine Steuereinrichtung (10), die in der Lage ist, einen Anfangsbetrieb auszuführen, der eingerichtet ist, eine Betriebsfrequenz des Verdichters (3) zu Beginn eines Wärmespeicherbetriebs zu steuern, bei dem das durch das Wärmetauschmittel (4) erwärmte Heizmedium in dem Wärmespeichebehälter (2) gespeichert wird; und
Auslasstemperaturerfassungsmittel (16) zum Erfassen einer Auslasstemperatur, wobei die Auslasstemperatur einer Temperatur des aus dem Wärmetauschmittel (4) strömenden Heizmediums entspricht,
**dadurch gekennzeichnet, dass**
der Anfangsbetrieb einen ersten Vorgang umfasst, der eingerichtet ist, die Betriebsfrequenz auf einer ersten Frequenz zu halten, und einen zweiten Vorgang nach dem ersten Vorgang, wobei der zweite Vorgang eingerichtet ist, die Betriebsfrequenz auf einer zweiten Frequenz zu halten, die höher als die erste Frequenz ist,
wobei die Steuereinrichtung (10) eingerichtet ist, den ersten Vorgang zu beenden, wenn die Auslasstemperatur eine Zieltemperatur erreicht.

2. Wärmespeichersystem (1) nach Anspruch 1, wobei die Steuereinrichtung (10) eingerichtet ist, eine Durchflussmenge des Heizmediums unter Verwendung der Pumpe (8) so zu steuern, dass die Auslasstemperatur gleich einer Zieltemperatur wird.

3. Wärmespeichersystem (1) nach Anspruch 1 oder 2,

wobei die Steuereinrichtung (10) eingerichtet ist, eine Geschwindigkeit der Pumpe (8) in Reaktion auf eine Auslasstemperaturabweichung zu korrigieren, wobei die Auslasstemperaturabweichung eine Differenz zwischen der Zieltemperatur und der Auslasstemperatur ist,
eine erste Empfindlichkeit eine Empfindlichkeit ist, bei der sich die Auslasstemperaturabweichung in einer Verringerung der Drehzahl der Pumpe (8) niederschlägt,
eine zweite Empfindlichkeit eine Empfindlichkeit ist, bei der sich die Auslasstemperaturabweichung in einer Erhöhung der Drehzahl der Pumpe (8) niederschlägt, und
die erste Empfindlichkeit niedriger als die zweite Empfindlichkeit im ersten Vorgang ist.

4. Wärmespeichersystem (1) nach einem der Ansprüche 1 bis 3,

wobei die Steuereinrichtung (10) eingerichtet ist, eine Geschwindigkeit der Pumpe (8) in Reaktion auf eine Auslasstemperaturabweichung zu korrigieren, wobei die Auslasstemperaturabweichung eine Differenz zwischen der Zieltemperatur und der Auslasstemperatur ist, und
eine Empfindlichkeit, bei der sich die Auslasstemperaturabweichung in einer Änderung der Drehzahl der Pumpe (8) im ersten Vorgang niederschlägt, geringer ist als eine Empfindlichkeit, bei der sich die Auslasstemperaturabweichung in einer Änderung der Drehzahl der Pumpe (8) im zweiten Vorgang niederschlägt.

5. Wärmespeichersystem (1) nach einem der Ansprüche 1 bis 4, wobei der Anfangsbetrieb einen Änderungsbetrieb umfasst, der eingerichtet ist, die Betriebsfrequenz zwischen dem ersten Vorgang und dem zweiten Vorgang schrittweise von der ersten Frequenz auf die zweite Frequenz zu erhöhen.

6. Wärmespeichersystem (1) nach einem der Ansprüche 1 bis 5, wobei als Kältemittel Kohlendioxid verwendet wird.

**Revendications**

1. Système de stockage de chaleur (1) comprenant :

   un compresseur (3) destiné à comprimer un réfrigérant ;

   une cuve de stockage de chaleur (2) destinée à stocker un milieu chauffant ;

   un moyen d'échange thermique (4) destiné à chauffer le milieu chauffant à l'aide de la chaleur du réfrigérant comprimé par le compresseur (3), le moyen d'échange thermique (4) étant prévu à l'extérieur de la cuve de stockage de chaleur (2) ;

   un circuit d'accumulation de chaleur qui comprend un trajet d'alimentation (13) destiné à fournir le milieu chauffant qui est évacué de la cuve de stockage de chaleur (2) au moyen d'échange thermique (4), un trajet de retour (14) destiné à renvoyer le milieu chauffant chauffé par le moyen d'échange thermique (4) vers la cuve de stockage de chaleur (2), et une pompe (8) destinée à faire circuler le milieu chauffant ;

   un moyen de commande (10) capable d'exécuter une opération initiale configurée pour contrôler une fréquence de fonctionnement du compresseur (3) au début d'une opération d'accumulation de chaleur lors de laquelle le milieu chauffant chauffé par le moyen d'échange thermique (4) est accumulé dans la cuve de stockage de chaleur (2) ; et

   un moyen de détection de température de sortie (16) destiné à détecter une température de sortie, la température de sortie étant une température du milieu chauffant qui est évacué du moyen d'échange thermique (4),

   **caractérisé en ce que**

   l'opération initiale comprend une première opération configurée pour maintenir la fréquence de fonctionnement à une première fréquence et une seconde opération qui suit la première opération, la seconde opération étant configurée pour maintenir la fréquence de fonctionnement à une seconde fréquence supérieure à la première fréquence,

   dans lequel le moyen de commande (10) est configuré pour exécuter la première opération lorsque la température de sortie atteint une température cible.

2. Système de stockage de chaleur (1) selon la revendication 1,
   dans lequel le moyen de commande (10) est configuré pour contrôler un débit du milieu chauffant à l'aide de la pompe (8) de sorte que la température de sortie devienne égale à une température cible.

3. Système de stockage de chaleur (1) selon la revendication 1 ou 2,

   dans lequel le moyen de commande (10) est configuré pour corriger une vitesse de la pompe (8) en réponse à un écart de température de sortie, l'écart de température de sortie étant une différence entre la température cible et la température de sortie,

   une première sensibilité est une sensibilité à laquelle l'écart de température de sortie se traduit par une diminution de la vitesse de la pompe (8),

   une seconde sensibilité est une sensibilité à laquelle l'écart de température de sortie se traduit par une augmentation de la vitesse de la pompe (8), et

   la première sensibilité est inférieure à la seconde sensibilité lors de la première opération.

4. Système de stockage de chaleur (1) selon l'une quelconque des revendications 1 à 3,

   dans lequel le moyen de commande (10) est configuré pour corriger une vitesse de la pompe (8) en réponse à un écart de température de sortie, l'écart de température de sortie étant une différence entre la température cible et la température de sortie, et

   une sensibilité à laquelle l'écart de température de sortie se traduit par un changement de vitesse de la pompe (8) lors de la première opération est inférieure à une sensibilité à laquelle l'écart de température de sortie se traduit par un changement de vitesse de la pompe (8) lors de la seconde opération.

5. Système de stockage de chaleur (1) selon l'une quelconque des revendications 1 à 4, dans lequel l'opération initiale comprend une opération de déplacement configurée pour augmenter progressivement la fréquence de fonctionnement afin de passer de la première fréquence à la seconde fréquence entre la première opération et la seconde opération.

6. Système de stockage de chaleur (1) selon l'une quelconque des revendications 1 à 5, dans lequel du dioxyde de carbone est utilisé comme réfrigérant.

# FIG. 1

: REFRIGERANT FLOW

: WATER FLOW

# FIG. 2

# FIG. 3

---COMPARATIVE EXAMPLE
——PRESENT EMBODIMENT

# FIG. 4

- - - COMPARATIVE EXAMPLE
—— PRESENT EMBODIMENT

# FIG. 5

--- COMPARATIVE EXAMPLE
—— PRESENT EMBODIMENT

# FIG. 6

——PRESENT EMBODIMENT

COMPRESSOR FREQUENCY

DISCHARGED REFRIGERANT TEMPERATURE

OUTFLOW-HOT-WATER TEMPERATURE

HEATING POWER

WATER FLOW RATE

POWER CONSUMPTION

OUTLET REFRIGERANT TEMPERATURE

t0    t1    t2    TIME

FIG. 7

```
                    ┌─────────────┐
                    │    START    │
                    └─────────────┘
                           │
                           ▼
          ┌────────────────────────────────┐
          │ DETECT STORED HOT WATER        │
          │ TEMPERATURE DISTRIBUTION       │ ～ S1
          │ IN TANK                        │
          └────────────────────────────────┘
                           │
                           ▼
          ┌────────────────────────────────┐
          │ CALCULATE TARGET HEAT          │ ～ S2
          │ STORAGE AMOUNT                 │
          └────────────────────────────────┘
                           │
                           ▼
          ┌────────────────────────────────┐
          │ PREDICT INFLOW WATER           │
          │ TEMPERATURE AT COMPLETION      │ ～ S3
          │ OF HEAT ACCUMULATING           │
          │ OPERATION                      │
          └────────────────────────────────┘
                           │
                           ▼
                                        S4
                      ╱╲
                    ╱    ╲
                  ╱ PREDICTED╲
                ╱ INFLOW WATER ╲      NO
               ╱ TEMPERATURE IS HIGHER╲────────────┐
                ╲ THAN REFERENCE ╱                 │
                  ╲     ?     ╱                     │
                    ╲      ╱                        │
                      ╲ ╱                           │
                       │ YES      S5                │            S6
                       ▼                            ▼
          ┌────────────────────────────┐   ┌────────────────────────┐
          │ EXECUTE INITIAL OPERATION  │   │ NOT EXECUTE            │
          └────────────────────────────┘   │ INITIAL OPERATION      │
                       │                    └────────────────────────┘
                       │                            │
                       │◄───────────────────────────┘
                       ▼
                    ┌─────────────┐
                    │    END      │
                    └─────────────┘
```

EP 3 967 948 B1

FIG. 8

START

S11

CURRENT TIME
IS IN NIGHTTIME
HOURS?

NO

YES

EXECUTE INITIAL
OPERATION — S12

NOT EXECUTE
INITIAL OPERATION — S13

END

21

**EP 3 967 948 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005134070 A
- EP 3333502 A1
- JP 2009150609 A
- EP 2261574 A1
- WO 2015177929 A1
- JP 2011214736 A